# EUROPEAN PATENT APPLICATION

(11) **EP 0 940 945 A2**
(43) Date of publication of application: **08.09.1999**
(21) Application number: 99301626.0
(22) Date of filing: 04.03.1999
(51) Int. Cl.: H04L 9/32

(54) **A method and apparatus for certification and safe storage of electronic documents**

(30) Priority: 06.03.1998 US 36101
(71) Applicant: AT&T Corp., New York, NY 10013-2412 (US)
(72) Inventor: Rochkind, Mark Meier, Morristown, New Jersey 07960 (US); Siil, Karl Andres, Princetown, New Jersey 08540 (US)
(74) Representative: Asquith, Julian Peter

(57) **Abstract**

An electronic document provided by a user is certified using cryptographic functions to create a document fingerprint which is then cryptographically signed together with a time stamp. The document which was certified is archived for safe deposit and later retrieval. The document fingerprint and time stamp are returned to the user as part of a document certificate. The document certificate can be used to verify the authenticity of copies of the original document and to establish the prior existence of the document. The filename of each document certificate can include a portion of the document fingerprint associated with an electronic document to enable a very efficient search of a set of document certificates to identify possible matches between document certificates and the electronic document being verified.

## Description

### BACKGROUND OF INVENTION

The present invention relates generally to the certification and safe storage of electronic documents. More specifically, the present invention relates to the application of cryptographic methods to certify and preserve electronic documents for possible subsequent retrieval and for verification of the contents of the electronic documents.

Known systems and services apply cryptographic methods to electronic documents to verify the contents of the electronic documents as unchanged and to establish a time of certification. For example, Surety Technologies provides a service which allows the user to remotely apply a cryptographic hash function to a document to produce a document hash. The user then sends this document hash to a computer at Surety. Surety creates a superhash from all document hashes received within a given time interval, time stamps the hash, and returns the time stamp and hash to the user.

Another known service is a public PGP (pretty good privacy) digital time stamping service provided by I.T. Consultancy Limited. This service receives electronic documents from users and then applies cryptographic methods to produce a unique serial number, a time stamp and a cryptographic signature. The service maintains a log of the cryptographic signature, its serial number and its time stamp. A user can, for example, send an electronic document to the service where the document is time stamped and forwarded to an intended recipient who receives the document and its time stamp. The purpose of the service is to time stamp documents signed with PGP technology.

These known systems and services, however, cannot both certify an electronic document and preserve a copy of the document for subsequent verification and/or retrieval.

### SUMMARY OF THE INVENTION

An electronic document provided by a user is processed (i.e., certified) using cryptographic functions to create a document fingerprint which is then sealed (i.e., cryptographically signed) with a time stamp in a document certificate so that the document fingerprint and time stamp cannot be counterfeit. The original electronic document which was certified can be archived for safe deposit and later retrieval. The document certificate can be used with public cryptographic software and an appropriate public key to verify the authenticity of copies of the original electronic document and to establish the prior existence of the documents.

An electronic document is certified and preserved by applying a first cryptographic hash function to the electronic document to produce a document fingerprint. A second cryptographic hash function is applied to a document certificate, which includes the document fingerprint, a time stamp, and a serial number, to produce a document certificate fingerprint. The document certificate fingerprint is cryptographically signed to produce a digital signature. The electronic document is stored and a copy of the document certificate is sent to the user.

The filename of the document certificate can include at least a portion of the document fingerprint (contained within the document certificate) concatenated with at least a portion of the time stamp. This filename structure can enable an efficient search of document certificates, which can be resident on a user's machine, for the document certificate(s) associated with a given electronic document. Consequently, a user can search the filenames of the document certificates rather than their contents. The authentication process can use the document certificate whose document fingerprint contents match the fingerprint of the document being verified. When more than one document certificate are associated with an electronic document, the time stamp component of the document certificate filename indicates which of the document certificates is the more relevant.

### BRIEF DESCRIPTION OF THE DRAWINGS

FIG. 1 illustrates a system block diagram of a communication system for performing certification and safe storage of electronic documents, according to an embodiment of the present invention.

FIG. 2 illustrates a method by which the server certifies and archives electronic documents, according to an embodiment of the present invention.

FIG. 3 illustrates a format for the serial number, according to an embodiment of the present invention.

FIG. 4 illustrates the process by which a user can authenticate the contents of a document certificate as having been unchanged since the time of certification to ensure the time of certification for the electronic document associated with the document certificate, according to an embodiment of the present invention.

FIG. 5 shows an output display indicating to the user the document certificates locally stored at the client, according to an embodiment of the present invention.

FIG. 6 illustrates a process by which a user can authenticate the contents of the electronic document as having been unchanged, according to an embodiment of the present invention.

FIG. 7 illustrates a process by which a user can authenticate the contents of the electronic document as having been unchanged, according to another embodiment of the present invention.

### DETAILED DESCRIPTION

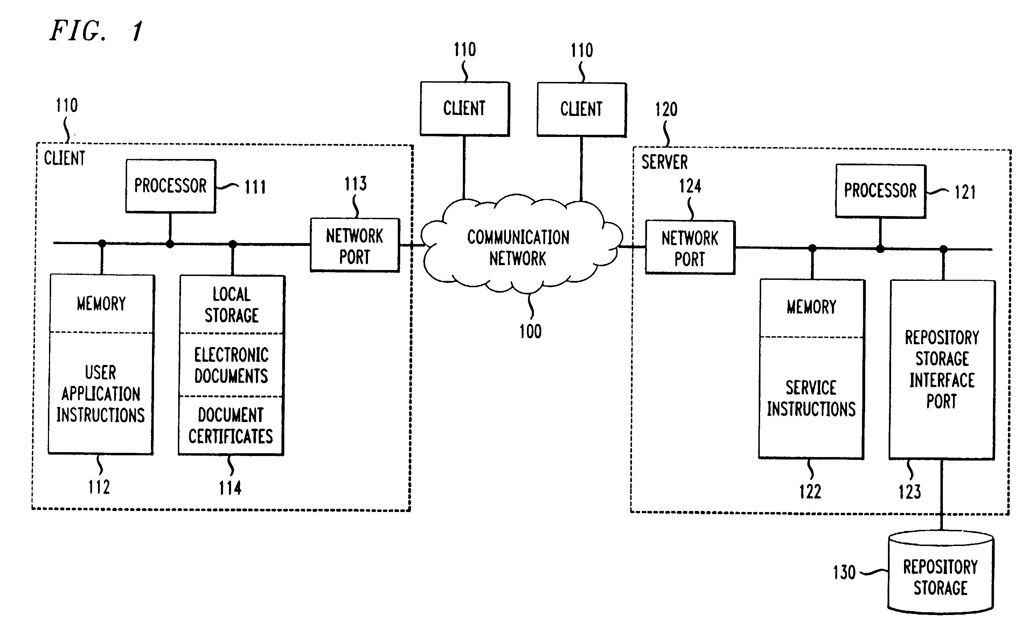

FIG. 1 illustrates a system block diagram of a communication system for performing certification and safe storage of electronic documents, according to an embodiment of the present invention. Communication network 100 interconnects client computers 110, and server 120 connected to repository storage 130.

Client computer 110 comprises processor 111, computer readable memory 112, network port 113 for coupling to network 100, and a local storage 114. Processor 111, computer-readable memory 112, network port 113 and local storage 114 are interconnected. Memory 112 can store user application instructions for execution by processor 111 to verify the contents of an electronic document and to establish that it existed at some prior date (i.e., affirm the time stamp in its associated document certificate). Local storage 114 can store electronic documents and document certificates, the combination of which can be used to verify the contents of an electronic document and its associated time stamp included in the corresponding document certificate. The memory 112 and storage facility 114, although shown as separate elements, could take the form of a single device.

Server 120 is a network node that comprises processor 121, computer readable memory 122; repository storage interface port 123 for coupling to repository storage 130; and network port 124 for coupling to communication network 100. Processor 111, memory 112, repository storage interface port 123 and network port 124 are interconnected.

Memory 122 stores service instructions adapted to be executed by processor 121 to certify electronic documents received from the user at client 110 and to store the electronic documents and their corresponding document certificates for possible later retrieval. The certification process allows a user to later verify the contents of an electronic document and its corresponding document certificate (which includes the document fingerprint resulting from the certification process and data indicating the time that certification was performed) as being unchanged. Another embodiment of server 120 is a server on a corporate intranet that stores proprietary electronic documents.

Repository storage 130 is accessible by server 120 and stores the electronic documents certified by server 120 and possibly their corresponding document certificates. Rather than store the document certificates, it may be convenient to retain and store the separate fields of data comprising the certificate in a separate database. The electronic documents and document certificates stored in repository storage 130 can be retrieved by server 120 and forwarded to a user at client 110 to replace lost or inadvertently changed electronic documents and/or document certificates. As discussed more fully below, these electronic documents and/or document certificates can be used to verify the contents of copies of the electronic document which were certified and to establish the time stamp of certification. This verification can be performed by either the user who originated the document certification or any other party with a copy of this corresponding document certificate.

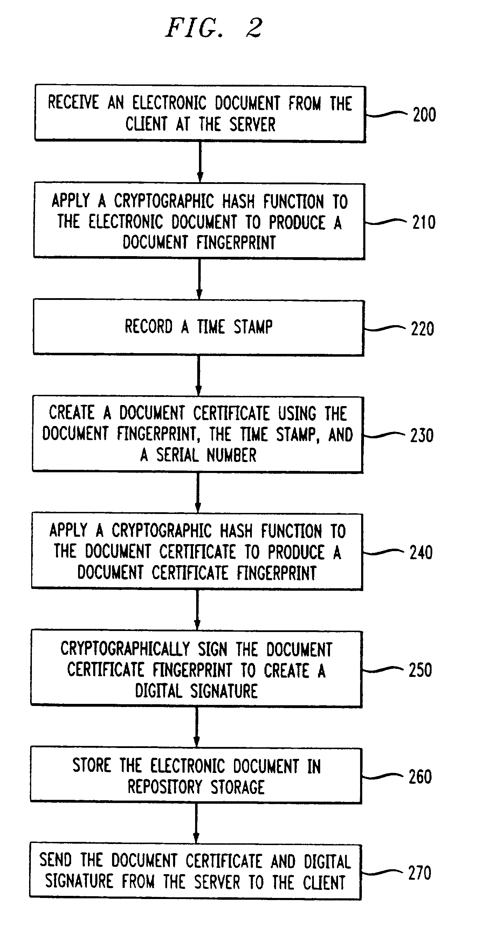

FIG. 2 illustrates a method by which the server certifies and archives electronic documents, according to an embodiment of the present invention. At step 200, server 120 receives an electronic document from client 110 through communication network 100. The electronic document sent by the client can be any type of binary file representing any type of information, such as video, audio, text, image, facsimile, multimedia or any combination of data, in any appropriate format. For example, the electronic document can be a spreadsheet, or some other form of database. The electronic document can be previously encrypted by the user at client 110 before being sent to server 120.

At step 210, server 120 applies a cryptographic hash function to the electronic document to produce a document fingerprint. The cryptographic hash function applied in step 210 can be any type of cryptographic hash function which exhibits the characteristics described below and which maps bit strings of arbitrary finite length into bit strings of fixed length. The output of such a cryptographic hash function is sometimes referred to as a fingerprint.

For example, a cryptographic hash function can be selected having the characteristics of collision resistance, preimage resistance and/or second-preimage resistance. Collision resistance indicates that it is computationally infeasible to find any two inputs (e.g., any two electronic documents) which hash to the same output (i.e., the same fingerprint). Preimage resistance indicates that for essentially any prespecified output, it is computationally infeasible to find any input which hashes to that output. In other words, where a fingerprint is pre-specified, it is very difficult (essentially impossible) to determine the contents of the electronic document which produced that fingerprint. A fingerprint produced by a cryptographic hash function of this class is considered irreversible. Finally, second-preimage resistance indicates that it is computationally infeasible to find any second input which has the same output as any specified input. In other words, where one electronic document is specified, it is very difficult (essentially impossible) to find another electronic document which produces the same fingerprint.

Manipulation detection codes (MDCs) can be used, such as the MD5 hash algorithm which produces a 128 bit (or 32 hex) length string. U.S. Patent No. 4,908,861, issued to Brachtl et al. on March 13, 1990, discloses the MD2 and MD4 hash algorithms and is incorporated by reference. To varying degrees, these MDCs exhibit the characteristics of collision resistance, preimage resistance and/or second-preimage resistance.

In alternative embodiments, a combination of cryptographic functions can be used. For example, the MD5 hash algorithm can be applied to an electronic document and the Secure Hash Algorithm (SHA-1) can be applied separately to the electronic document; the fingerprints or a portion thereof from each fingerprint can be combined to produce a composite fingerprint. Such a scheme allows the best characteristics of one cryptographic hash function to be combined with the best characteristics of another cryptographic hash function. In other words, the collision resistance and second preimage resistance characteristics of a collision resistant hash function, such as the MD5 hash algorithm, can be combined with the preimage resistance and the second preimage resistance characteristics of a one-way hash function, such as the SHA-1 hash algorithm.

At step 220, server 120 records a time stamp. This time stamp can be used in the future to determine when the certification method, generally described in reference to FIG. 2, was applied to the electronic document received in step 200. Note that the recording of the time stamp in step 220 can be performed just before or contemporaneous with step 210. The time recorded should be some form of universal time such as Greenwich Mean Time (GMT). The time stamp has a time resolution which indicates the smallest interval of time by which the time stamp is incremented.

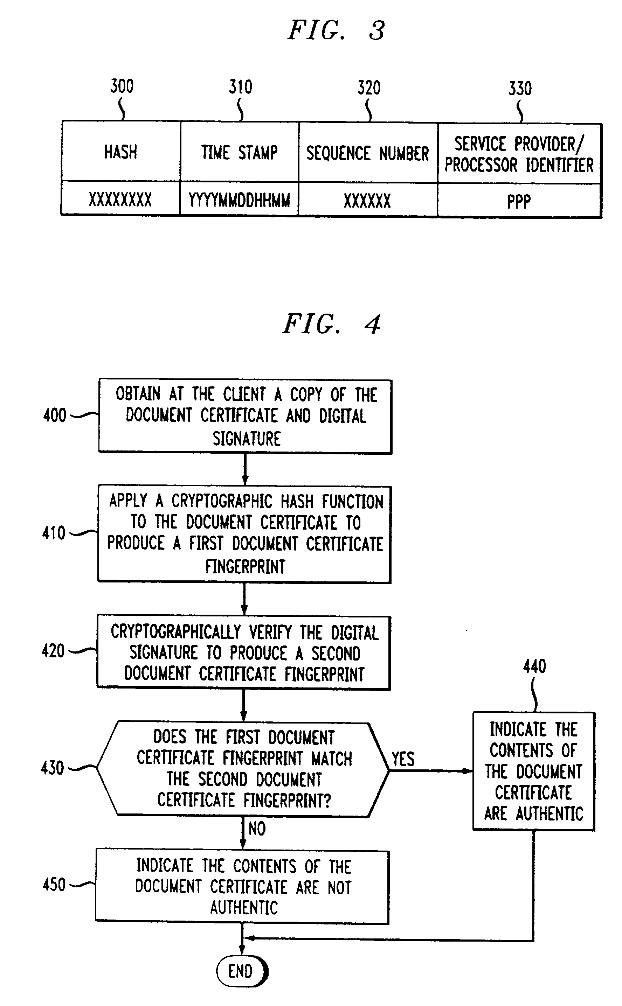

At step 230, a document certificate is created by server 120 using the document fingerprint produced in step 210, the time stamp produced in step 220, and a serial number. FIG. 3 illustrates a format for the serial number, according to an embodiment of the present invention. The serial number can include hash 300, time stamp 310, sequence number 320 and service provider/processor number 330. Hash 300 can be, for example, hexadecimal characters from the digital fingerprint produced in step 210 or a subset thereof. For example, hash 300 can include eight of the thirty-two hexadecimal characters of a document fingerprint produced by the MD5 hashing algorithm applied in step 210. Alternatively, hash 300 can include as many as thirty-two of the hexadecimal characters from the document fingerprint produced by the MD5 hashing algorithm applied in step 210.

Time stamp 310 indicates the date and time at which the document was certified by server 120. The value of time stamp 310 corresponds to the time stamp record recorded in step 220. Time stamp 310 can include, for example, the year, month, day, hour and minute.

Sequence number 320 is a unique number serially counted by a particular server 120 for a particular time interval. Where values of time stamp 310 indicate the date and the time to, for example, the minute, sequence number 320 should have a sufficient range (number of digits) to serially count the maximum number of electronic documents which can be certified per minute.

For example, consider the case where the minimum time needed for processor 121 of server 120 to certify an electronic document is about four microseconds. The maximum number of electronic documents that can be certified in a minute is about sixteen million and, consequently, sequence number 320 should have at least six hexadecimal digits.

Service provider/processor identifier 330 is a unique string indicating a particular server 120 which distinguishes that server 120 from any other server 120 possibly connected to communication network 100. Service provider/processor identifier 330 can include a service provider indicator and a processor indicator; a portion of service provider/processor identifier 330 can indicate a particular service provider and another portion of service provider/processor identifier 330 can indicate the particular service provider's processor performing the certification described in reference to FIG. 2.

In alternative embodiments, the document certificate additionally can include a document name and a user-specified description. The document name can be in a format required by the operating system of the client 110 which created the electronic document and/or from where it was sent. For example, a file created in Microsoft® DOS® or Windows® operating system can have the document name of "peer.doc". The user-specified description can be text created by the user as notes about the particular electronic document; the user can, for example, describe the electronic document to provide a reminder about content for later use.

At step 240, a cryptographic hash function is applied to the document certificate created in step 230 to produce a document certificate fingerprint. The particular cryptographic hash function applied in step 240 can be the same as the cryptographic hash function applied in step 210 or a different cryptographic hash function with similar characteristics.

At step 250, the document certificate fingerprint is cryptographically signed to create a digital signature. The cryptographic signing of the document certificate fingerprint can be performed by any known public key encryption scheme such as the RSA public key encryption scheme disclosed in U.S. Patent 4,405,829 by Rivest, et al. issued on September 20, 1983 and which is incorporated herein by reference. In this case, server 120 can cryptographically sign the document certificate fingerprint using a private key to create the digital signature; subsequently, a user at client 110 can cryptographically verify the digital signature using the public key corresponding to the private key.

At step 260, the electronic document is stored in repository storage 130. Alternatively, the electronic document and the document certificate can be stored in repository storage 130.

At step 270, the document certificate and its associated digital signature are sent from the server to the user at the client. The client can store the document certificate and the digital signature, for later use to verify the contents of copies of the original electronic document as unchanged and to establish a prior date of existence via the time stamp in the document certificate. The user can distribute copies of document certificates and their associated digital signatures to others.

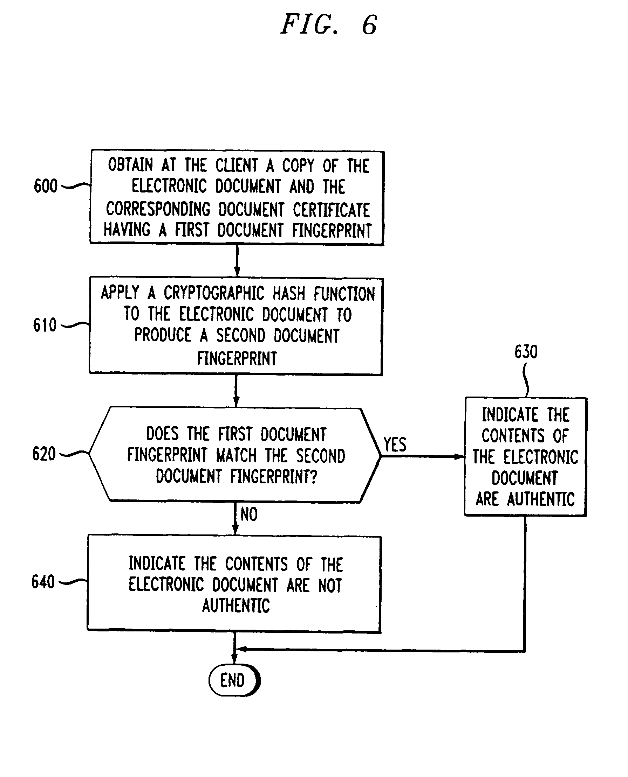

FIG. 4 illustrates the process by which a user can authenticate the contents of a document certificate as having been unchanged since the time of certification to ensure that the time of certification for the electronic document associated with the document certificate and the document fingerprint contained therein are authentic, according to an embodiment of the present invention. By authenticating the contents of the document certificate as being unchanged since the time of certification, a user can authenticate the date/time at which the corresponding electronic document was certified. By authenticating the contents of the document certificate as being unchanged since the time of certification, the user also can authenticate the document fingerprint contained within the document certificate to subsequently authenticate the electronic document (see, e.g., the discussion regarding FIG. 6 below).

Note that the specific user that submitted the electronic document to server 120 for certification can perform the method described in FIG. 4. Additionally, users other than the specific user who submitted the electronic document for certification can also perform the method described in FIG. 4. In either case, the specific user that submitted the electronic document to server 120 for certification need not be the user who originated (i.e., created) the electronic document.

At step 400, the user performing the certificate authentication obtains a copy of the document certificate and the digital signature. For example, the document certificate and the digital signature can be obtained from storage 114 of client 110. In the case where the user authenticating the contents of the document certificate is the party who submitted the corresponding electronic document for certification, for example, the document certificate and the digital signature may still be stored in storage 114 of client 110 after initially being provided by server 120 to the user upon completion of certification.

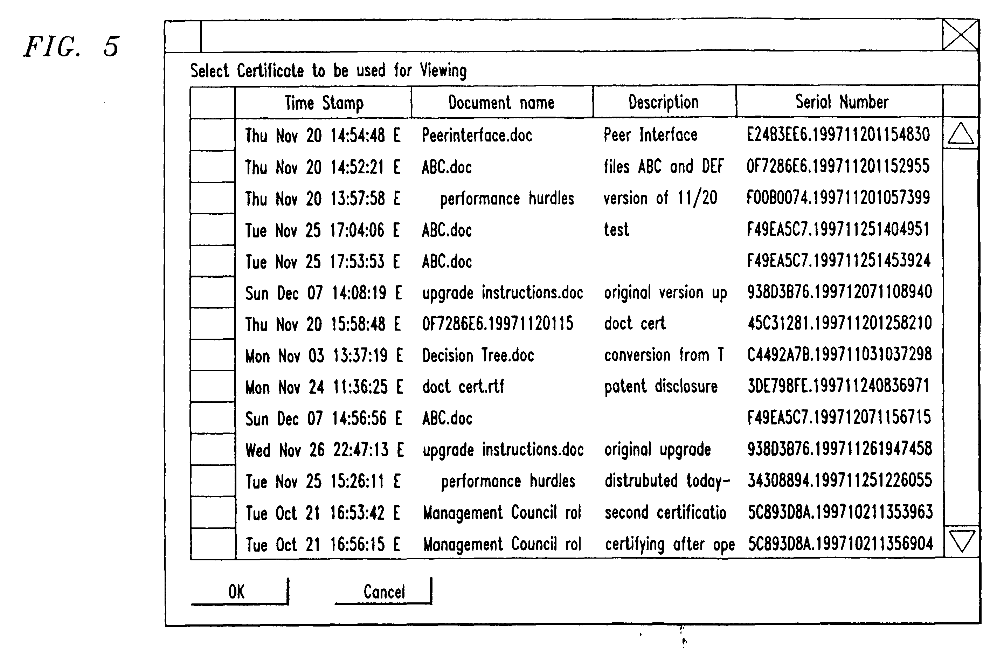

FIG. 5 shows an output display indicating to the user the document certificates locally stored at the client, according to an embodiment of the present invention. The output display shown in FIG. 5 indicates the time stamp, document name, description and serial number associated with each document certificate. The user can view the list and select a document certificate to be authenticated.

In alternative embodiments, the user authenticating the contents of the document certificate can be someone other than the specific user who originally submitted the corresponding electronic document for certification. In this case, the user performing authentication can receive a copy of the document certificate and the digital signature from another party, such as the specific original submitting user. The authenticating user can receive the document certificate and digital signature by, for example, electronic mail (i.e., e-mail) or by portable storage medium (e.g., a floppy disk).

At step 410, a cryptographic hash function is applied to the document certificate to produce a first document certificate fingerprint. The cryptographic hash function applied in step 410 is the same cryptographic hash function previously applied by server 120 and described in reference to step 240 of FIG. 2. To ensure that the user attempting to authenticate a document certificate uses the same cryptographic hash function used by the server when the certificate was created, the service provider associated with the server can distribute or make available application software containing the specific cryptographic hash function or must specify same.

At step 420, the digital signature obtained in step 400 is cryptographically verified (i.e., read) to produce a second document certificate fingerprint. The digital signature can be cryptographically verified using the complement of the cryptographic signing (i.e., encryption) used by server 120 in step 240 of Fig. 2. For example, where server 120 previously cryptographically signed the certificate fingerprint using a private key according to a public key encryption scheme (e.g., RSA), the user at client 110 can cryptographically verify (i.e., read) the digital signature using the public key corresponding to the private key previously used by server 120. Just as the service provider associated with the server which created the document certificate can distribute or specify the cryptographic hash function used to create the fingerprints created during certification, this service provider can make available to users the public key with which the digital signature associated with the document certificate can be read.

At conditional step 430, the first document certificate fingerprint produced in step 410 is compared to the second document certificate fingerprint derived from the digital signature associated with the document certificate. If the contents of both document certificate fingerprints are the same, then the process proceeds to step 440 where the contents of the document certificate are indicated as having been unchanged since certification (i.e., the contents of the document certificate are authentic).

At step 430, if the contents of the first document certificate fingerprint produced in step 410 are different from the second document certificate fingerprint in the document certificate, then the process proceeds to step 450 where the contents of the document certificate are indicated as not authentic (i.e., they have been changed since the time of certification). Where the contents of the document certificate are not authenticated, the document certificate and its contents have no validity.

FIG. 6 illustrates a process by which a user can authenticate the contents of a particular electronic document as having been unchanged, according to an embodiment of the present invention. The process described in FIG. 6 is premised on the assumptions that the user at client 110 knows a document certificate corresponding to the particular electronic document exists, that the contents of the document certificate are authentic (see, e.g., the discussion above regarding FIG.4) and that the document certificate is stored at client 110. Note that the process described in FIG. 6 can be performed by the user who submitted the electronic document for certification or by other users.

At step 600, the user at client 110 obtains a copy of the electronic document and the corresponding document certificate having a first document fingerprint. This can be performed in a number of ways. For example, the user may have retained an unchanged copy of the electronic document since it was submitted for certification and/or the user also may have retained an unchanged copy of the document certificate since provided by server 120 at the time of certification.

Alternatively, a user can request server 120 to provide the user at client 110 a copy of the electronic document and/or the corresponding document certificate; server 120 can retrieve the electronic document and/or the corresponding document certificate from repository storage 130 and forward then to the user at client 110. Presumably, server 120 will only forward an electronic document and/or the corresponding document certificate to the user who originally submitted the electronic document for certification by server 120 or to another user authorized by the user who originally submitted the document. This selective forwarding can be accomplished through the use of passwords, for example, whereby server 120 identifies the specific user requesting forwarding.

In alternative embodiments, the user can receive the electronic document, the corresponding document certificate and its associated digital signature by, for example, electronic mail (i.e., e-mail) or by portable storage medium (e.g., a floppy disk). For example, a user who originally submitted the electronic document can forward the electronic document, the corresponding document certificate and its associated digital signature to a second user. The second user can use a locally resident copy of the user application instructions to separately authenticate the contents of the electronic document. The second user can further distribute copies of the document, the document certificate and its associated digital signature.

Before proceeding, the user uses the method of FIG. 4 to establish the authenticity of the document certificate in hand. When the method of FIG. 4 indicates that the contents of the document certificate are authentic, the user continues with step 610.

At step 610, a cryptographic hash function is applied to the copy of the electronic document to be authenticated to produce a second document fingerprint. The cryptographic hash function applied in step 610 is the same cryptographic hash function previously applied by server 120 and described in reference to step 210 of FIG. 2.

At conditional step 620, the first document fingerprint obtained in step 600 is compared to the second document fingerprint produced in step 610. If the first document fingerprint matches the second document fingerprint, then the process proceeds to step 630 where the contents of the electronic document are indicated as having been unchanged since certification (i.e., the contents of the electronic document are authentic).

If, however, the first document fingerprint does not match the second document fingerprint, then the process proceeds to step 640 where the contents of the electronic document are indicated as being changed (i.e., the contents of the electronic document are not authentic). Because the process described in FIG. 6 is premised on the assumption that the user at client 110 knows a document certificate for the corresponding electronic document exists and is stored at client 110, the first document fingerprint will not match the second document fingerprint only when the contents of the electronic document have been changed (intentionally or unintentionally).

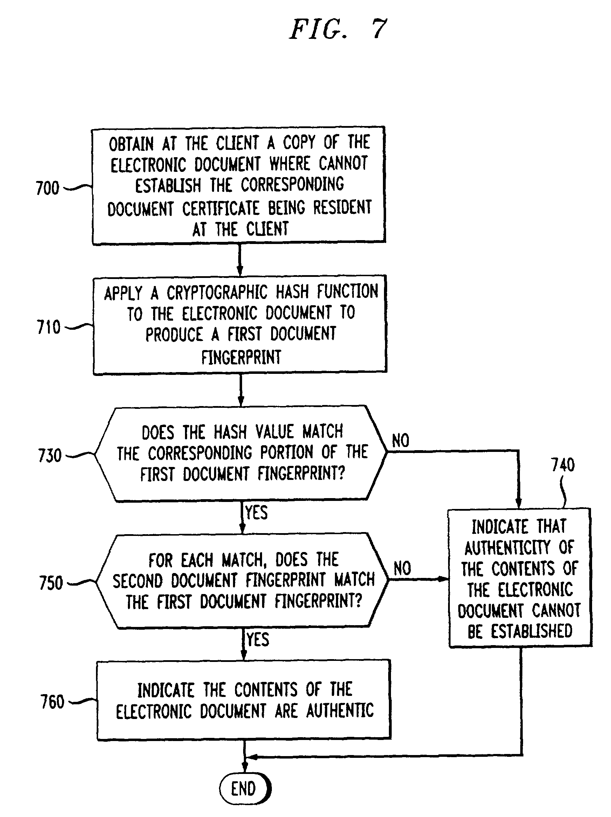

FIG. 7 illustrates a process by which a user can authenticate the contents of the electronic document as having been unchanged, according to another embodiment of the present invention. The process described in reference to FIG. 7 is applicable where the user cannot establish that the corresponding document certificate is locally stored in local storage 114 at the client 110. Not only may the user be unable to establish that a corresponding document certificate is locally stored, the user may not know whether the electronic document has been previously certified.

In an alternative embodiment, document certificates can be maintained in a public or controlled access database connected to communication network 100. A user can create a document fingerprint and then search the directory of the public or controlled access database to find a matching document fingerprint. If a match is found, the user can thereby establish that the document in the user's possession is an authentic copy of some original which was previously certified on the date indicated by the document certificate. Depending on other information which can be stored with the document fingerprint in the public or controlled access directory, the user can learn more about the document in the user's possession.

At step 700, the user at client 110 obtains a copy of the electronic document whose contents are to be authenticated. As just discussed, the user cannot yet establish whether the corresponding document certificate is locally stored at client 110.

At step 710, a cryptographic hash function is applied to the electronic document to produce a first document fingerprint. The cryptographic hash function applied in step 710 is the same cryptographic hash function previously applied by server 120 and described in reference to step 210 of FIG. 2.

At step 720, for each document certificate locally resident at local storage 114 of client 110, the value of the hash component (e.g. hash 300 in FIG 3) of the serial number for the document certificate is obtained. Note that each document certificate includes its own second document fingerprint which can be compared to the first document fingerprint produced at step 710. As FIG. 5 illustrates for one embodiment, each document certificate filename comprises the document certificate serial number beginning with eight hexadecimal digits which equal the first eight hexadecimal digits of the document fingerprint contained within the document certificate. In alternative embodiments, a greater or fewer number of digits of the document fingerprint can be used in the serial number and, consequently, obtained at step 720. By including in the filename of each document certificate some subset of the document fingerprint contained in the document certificate, the filenames of the resident document certificates (of which there may be thousands) or a public or controlled-access database of document certificates (of which there may be thousands) can be scanned simply and efficiently in search of a match with the fingerprint computed from the document to be authenticated. This method for naming the document certificates obviates the need to open each document certificate file to check for the existence of a match.

At conditional step 730, the value of the hash component (e.g. hash 300 in FIG. 3) of the serial number for the document certificate is compared to the corresponding portion of the first document fingerprint produced in step 710. For example, where the value of hash 300 is the first eight hexadecimal digits of the document fingerprint previously produced by server 120 (see step 210 of FIG. 2), the corresponding first eight hexadecimal digits of the document fingerprint produced in step 710 are compared. If no match results from cycling through all document certificates in the local storage 114, or in some public or controlled-access database, the process proceeds to step 740 where it is indicated that authenticity cannot be established. If the portions of the document fingerprints match, then the process proceeds to conditional step 750.

Note that even though authenticity of the contents of the electronic document cannot be established in step 740 of FIG 7, the document may still be an authentic copy of some original. Failing to establish authenticity simply indicates that the document certificate corresponding to that original may not be present in the local storage 114 or in any other database(s) which were searched.

At conditional step 750, for each match resulting from conditional step 730, the corresponding second document fingerprint included in the document certificate associated with the matched serial number is compared to the first document fingerprint produced in step 710. In other words, each matched serial number has a corresponding document certificate which includes the full document fingerprint; at conditional step 750, this full document fingerprint is compared to the document fingerprint produced in step 710. Note that for step 750 to be valid, the authenticity of the contents of the document certificate should have been previously established using the process of FIG. 4.

If the first document fingerprint does not match any of the second document fingerprints (i.e., the full document fingerprint associated with the matched serial number), then the process proceeds to step 740 where it is indicated that the contents of the electronic document cannot be shown to be authentic.

If the first document fingerprint matches the second document fingerprint (i.e., the full document fingerprint associated with the matched serial number), then the process proceeds to step 760. At step 760, the contents of the electronic document are indicated as having been unchanged since certification (i.e., the contents of the electronic document are authentic).

It should, of course, be understood that while the present invention has been described in reference to particular system configurations and processes, other system configurations and processes should be apparent to those of ordinary skill in the art. For example, the present invention can include any number of clients and servers, and be connected to a telecommunication network or combination of telecommunication networks.

## Claims

1. A method for certifying and preserving an electronic document, comprising:
(a) applying a first cryptographic hash function to the electronic document to produce a document fingerprint;
(b) applying a second cryptographic hash function to a document certificate which includes the document fingerprint, a time stamp, and a serial number to produce a document certificate fingerprint;
(c) cryptographically signing the certificate fingerprint to produce a digital signature; and
(d) storing the electronic document.

2. The method of claim 1, wherein the serial number includes at least a portion of the document fingerprint produced in step (a).

3. The method of claim 1, wherein the serial number includes at least a portion of the document fingerprint produced in step (a) and the time stamp.

4. The method of claim 1, wherein the serial number includes at least a portion of the document fingerprint produced in step (a), the time stamp, and a sequence number.

5. The method of claim 1, wherein the serial number is used as a filename for the document certificate.

6. The method of claim 1, wherein the serial number includes at least a portion of the document fingerprint produced in step (a), the time stamp having a time resolution, a sequence number reset every time resolution and a service identifier indicating a processor used by a service provider.

7. The method of claim 1, wherein:
the first cryptographic hash function applied in step (a) is a collision resistant hash function,
the second cryptographic hash function applied in step (b) is a collision resistant hash function, and
the cryptographic signing in step (c) uses a public-key encryption scheme including a private key for cryptographic signing and its associated public key for cryptographic verifying.

8. The method of claim 1, wherein:
the first cryptographic hash function applied in step (a) is a MD5 hash function,
the second cryptographic hash function applied in step (b) is a MD5 hash function, and
the cryptographic signing in step (c) uses an RSA public-key encryption scheme including an RSA private key for cryptographic signing and its associated RSA public key for cryptographic verifying.

9. The method of claim 1, further comprising:
(e) applying a third cryptographic hash function to the electronic document to produce a second document fingerprint;
the serial number including at least a portion of the first document fingerprint produced in step (a) and at least a portion of the second document fingerprint produced in step (e).

10. The method of claim 1, further comprising:
(e) applying a third cryptographic hash function to the electronic document to produce a second document fingerprint, the third cryptographic hash function being the SHA-1 hash function;
the serial number including at least a portion of the first document fingerprint produced in step (a) and at least a portion of the second document fingerprint produced in step (e).

11. The method of claim 1, wherein the storing step (d) further includes storing the document certificate and its associated digital signature.

12. The method of claim 1, further comprising:
(e) sending to the user the document certificate stored in said storing step (d) and the digital signature.

13. The method of claim 1, further comprising:
(e) deleting the electronic document stored in said storing step (d).

14. A method for retrieving and authenticating an electronic document, comprising:
(a) obtaining the electronic document, a document certificate associated with the electronic document and having a first document fingerprint, and a digital signature associated with the document certificate;
(b) applying a first cryptographic hash function to the document certificate to produce a first document certificate fingerprint;
(c) cryptographically verifying the digital signature to produce a second document certificate fingerprint;
(d) indicating, when the first document certificate fingerprint matches the second document certificate fingerprint, that the first document fingerprint and the certification time associated with the document certificate are authentic;
(e) applying a second cryptographic hash function to the electronic document to produce a second document fingerprint; and
(f) indicating, when the first document fingerprint matches the second document fingerprint, that the contents of the electronic document are authentic.

15. The method of claim 14, further comprising:
(g) sending a request to a server for the electronic document and the document certificate associated with the electronic document.

16. The method of claim 14, wherein said indicating step (f) includes:
(i) comparing a hash value of a serial number included in a filename of the document certificate with a corresponding portion of the second document fingerprint;
(ii) comparing, when the hash value and the corresponding portion of the second document fingerprint compared in step (f)(i) match, the first document fingerprint of the document certificate with the second document fingerprint.

17. The method of claim 14, wherein said indicating step (f) includes:
(i) comparing the second document fingerprint with a plurality of filenames each filename corresponding to one document certificate from a plurality of document certificates, each filename including a hash value component of a serial number associated with its document certificate; and
(ii) comparing, when the hash value component of at least one filename from the plurality of filenames matches a corresponding portion of the second document fingerprint compared in step (f)(i), the first document fingerprint of the document certificate with the second document fingerprint.

18. The method of claim 14, wherein said indicating step (f) includes:
(i) comparing the second document fingerprint with a plurality of filenames each filename corresponding to one document certificate from a plurality of document certificates, each filename beginning with a portion of the first document fingerprint; and
(ii) comparing, when the hash value component of at least one filename from the plurality of filenames matches a corresponding portion of the second document fingerprint compared in step (f)(i), the first document fingerprint of the document certificate with the second document fingerprint.

19. The method of claim 14, wherein:
the first cryptographic hash function applied in step (b) is a collision resistant hash function,
the second cryptographic hash function applied in step (e) is a collision resistant hash function, and
the cryptographic verifying in step (c) uses a public-key encryption scheme including a private key for cryptographic signing and its associated public key for cryptographic verifying.

20. The method of claim 14, wherein:
the first cryptographic hash function applied in step (b) is a MD5 hash function,
the second cryptographic hash function applied in step (e) is a MD5 hash function, and
the cryptographic verifying in step (c) uses an RSA public-key encryption scheme including an RSA private key for cryptographic signing and its associated RSA public key for cryptographic verifying.

21. The method of claim 14, further comprising:
(g) applying a third cryptographic hash function to the electronic document to produce a third document fingerprint;
the serial number including at least a portion of the second document fingerprint produced in step (e) and at least a portion of the third document fingerprint produced in step (g).

22. The method of claim 14, further comprising:
(g) applying a third cryptographic hash function to the electronic document to produce a second document fingerprint, the third cryptographic hash function being the SHA-1 hash function;
the serial number including at least a portion of the second document fingerprint produced in step (e) and at least a portion of the third document fingerprint produced in step (g).

23. The method of claim 14, wherein the electronic document, the document certificate and the digital signature obtained in step (a) are obtained from local storage.

24. The method of claim 14, wherein the electronic document, the document certificate and the digital signature obtained in step (a) are obtained from a service provider, who originally certified the electronic document, through a communication network.

25. The method of claim 14, wherein the electronic document, the document certificate and the digital signature obtained in step (a) are obtained from a remote party through a communication network using electronic mail.

26. The method of claim 14, wherein the electronic document, the document certificate and the digital signature obtained in step (a) are obtained from a remote party through portable medium.

27. A method for determining whether an electronic document is an authentic copy based on a plurality of document certificates each having its own document fingerprint, comprising:
(a) applying a cryptographic hash function to the electronic document to produce a first document fingerprint;
(b) comparing the first document fingerprint to the document fingerprint of at least one document certificate from the plurality of document certificates; and
(c) indicating, when the first document fingerprint matches the document fingerprint of the at least one document certificate from the plurality of document certificates, that the electronic document is an authentic copy of the electronic document associated with the at least one document certificate.

28. The method of claim 27, wherein the plurality of document certificates are stored on a publicly accessible database.

29. The method of claim 27, wherein the plurality of document certificates are stored on a limited access database.

30. A method for determining whether a candidate electronic document is an authenticate copy of an original electronic document using a document certificate associated with the original electronic document, comprising:
(a) obtaining the candidate electronic document, the document certificate associated with the candidate electronic document and having a first document fingerprint, and a digital signature associated with the document certificate;
(b) applying a first cryptographic hash function to the document certificate to produce a first document certificate fingerprint;
(c) cryptographically verifying the digital signature to produce a second document certificate fingerprint;
(d) indicating, when the first document certificate fingerprint matches the second document certificate fingerprint, that the first document fingerprint and the certification time associated with the document certificate are authentic;
(e) applying a second cryptographic hash function to the candidate electronic document to produce a second document fingerprint; and
(f) indicating, when the first document fingerprint matches the second document fingerprint contained within the document certificate, that the candidate electronic document is the authentic copy of the original electronic document.

31. An apparatus for certifying and preserving an electronic document, comprising:
a processor;
a first memory connected to said processor, said first memory storing the electronic document and storing a plurality of instructions adapted to be executed by said processor to:
(a) apply a first cryptographic hash function to the electronic document to produce a document fingerprint;
(b) apply a second cryptographic hash function to a document certificate which includes the document fingerprint, a time stamp, and a serial number to produce a document certificate fingerprint;
(c) cryptographically sign the certificate fingerprint to produce a digital signature; and
(d) store the electronic document in said memory.

32. An apparatus for certifying and preserving an electronic document, comprising:
means for applying a first cryptographic hash function to the electronic document to produce a document fingerprint;
means for applying a second cryptographic hash function to a document certificate which includes the document fingerprint, a time stamp, and a serial number to produce a document certificate fingerprint;
means for cryptographically signing the certificate fingerprint to produce a digital signature; and
means for storing the electronic document.

33. An apparatus for certifying and preserving an electronic document to enable a user to subsequently authenticate contents of and certification date of the electronic document, comprising:
a processor; and
a memory connected to said processor, said memory storing a plurality of instructions adapted to be executed by said processor to:
(a) obtain the electronic document, a document certificate associated with the electronic document and having a first document fingerprint, and a digital signature associated with the document certificate;
(b) apply a first cryptographic hash function to the document certificate to produce a first document certificate fingerprint;
(c) cryptographically verify the digital signature to produce a second document certificate fingerprint; and
(d) indicate, when the first document certificate fingerprint matches the second document certificate fingerprint, that the first document fingerprint and the certification time associated with the document certificate are authentic.
(e) apply a second cryptographic hash function to the electronic document to produce a second document fingerprint;
(f) indicate, when the first document fingerprint matches the second document fingerprint, that the contents of the electronic document are authentic.
